# EUROPEAN PATENT SPECIFICATION

(11) **EP 0 581 966 B1**
(45) Date of publication and mention of the grant of the patent: **15.01.1997**
(21) Application number: 93904326.1
(22) Date of filing: 19.02.1993
(51) Int. Cl.: H02K 9/19, H02K 9/22

(54) **MOTOR EQUIPPED WITH STATOR COOLING MEANS**
MIT STÄNDERKÜHLMITTELN AUSGERÜSTETER MOTOR
MOTEUR EQUIPE D'UN MOYEN DE REFROIDISSEMENT DU STATOR

(30) Priority: 21.02.1992 JP 35264/92
(43) Date of publication of application: 09.02.1994
(73) Proprietor: FANUC LTD., Minamitsuru-gun, Yamanashi 401-05 (JP)
(72) Inventor: NAKAMURA, Kosei, Fanuc Manshion Harimomi 11-601, Minamitsuru-gun, Yamanashi 401-05 (JP); HAYASHI, Yoshiyuki, Sunto-gun, Shizuoka 410-14 (JP); TAMAI, Takayuki, Fanuc Dai-3 Vira-karamatsu, Minamitsuru-gun, Yamanashi 401-05 (JP)
(74) Representative: Otte, Peter, Dipl.-Ing.
(86) International application number: JP9300206
(87) International publication number: WO9317485

(56) References cited:
- EP-A- 0 321 582
- FR-A- 1 364 058
- JP-A- 1 198 243
- JP-A- 2 237 445
- JP-A- 4 145 859
- JP-A-49 104 104
- JP-A-60 121 941
- JP-U- 1 157 554
- US-A- 4 213 745
- PATENT ABSTRACTS OF JAPAN vol. 10, no. 209 (E-421) (2265) 22 July 1986 & JP-A-61 049 637 (FANUC) 11 March 1986
- PATENT ABSTRACTS OF JAPAN vol. 6, no. 21 (E-93) (899) 6 February 1982 & JP-A-56 141 741 (MITSUBISHI) 5 November 1981

## Description

### TECHNICAL FIELD

The present invention relates to an electric motor having means for cooling a stator, and more particularly to an electric motor having means for cooling windings arranged within slots of the stator by absorbing the heat generated by the windings, and thus removing heat generated in the stator.

### BACKGROUND ART

Conventionally, various cooling structures for an electric motor are used, such as a structure in which heat generated in a stator is absorbed through a stator core, or a structure in which heat generated in a rotor is absorbed through a rotating shaft.

US-A-4,213,745 discloses a pump for a central heating system having a tubular housing and an electric motor in which the peripheral cavities defined between windings and two cup-shaped members are filled with a curable filler such as a epoxy resin to reduce the effect of small movement of the laminations or the windings. Although, this filler thermally connects the windings to the cup-shaped members, it did not have such a heat conductivity to obtain a substantial cooling effect for the windings.

EP-A-0 321 582 further discloses a method of applying a synthetic resin which is coated on a stator core and windings. However, this synthetic resin also does not have a heat conductivity to obtain an effective cooling of the windings.

A heat-absorbing, cooling structure for a stator is known, in that an outer casing is fixed in close contact with an outer surface of a stator core surrounding a rotor, passages for a cooling medium are formed in the outer casing, and the heat generated by the stator core is absorbed by the cooling medium. A structure is also known, in that cooling medium passages are directly formed within a stator core, so as to improve the cooling effect (see, e.g., Japanese Unexamined Patent Publication (Kokai) No. 2-263743).

According to the above-mentioned cooling structures, it is possible to cool the stator of an electric motor by absorbing the heat generated mainly by the stator core. However, the heat generation in a stator is not only caused by iron loss but also by the copper loss in the windings arranged in the stator core. By effectively absorbing the heat generated by the copper loss and thus cooling the windings, a fluctuation in motor power, due to the change of winding resistance, is prevented, and the reliability of an electric motor is improved. However, the above-mentioned conventional cooling structure cannot directly absorb the heat generated from the windings. Therefore, the heat of the windings is partially transmitted and absorbed through the stator core, but is mostly emitted from the coil-ends of the windings, which project from the axial end faces of the stator core, into the atmosphere. Thus, in the conventional cooling structure, it is difficult to obtain a substantial cooling effect for the windings.

### DISCLOSURE OF THE INVENTION

The object of the present invention is to provide an electric motor having cooling means that can effectively cool a stator by absorbing the heat generated by a stator core due to iron loss and the heat generated by the windings arranged in the stator core due to copper loss, and thus can improve the performance of the electric motor.

To accomplish the above object, the present invention provides an electric motor having means for cooling a stator, comprising front and rear housing members;
a stator fixed axially between said front and rear housing members, and including a generally cylindrical laminated stator core having a plurality of slots at inner periphery of said core, and a plurality of windings arranged in each slot of said laminated stator core;
a rotor arranged inside said stator in a rotatable manner;
a cooling medium circuit formed in said housing members and said laminated stator core, and continuously extending along at least an axial entire length of said laminated stator core and a length of coil-ends of said windings projecting from axial both ends of said laminated stator core;
a heat-transfer member formed from a composite heat-conductive resinous material that is made by mixing a heat-resistant resin with a highly heat-conductive, electrically-insulative granular material, said heat-transfer member covering said windings, and coming into contact with inner surfaces of said slots of said laminated stator core and said housing members.

According to the preferred embodiment of the present invention, the heat-transfer member may be molded by a process in that the composite heat-conductive resinous material is poured into spaces defined between the windings and the inner surfaces of the slots of the laminated stator core and the housing in a molten state, and then the composite heat-conductive resinous material is set. Alternatively, the heat-transfer member may be formed from composite heat-conductive resinous material which is molded by a process in that the granular materials are filled into spaces defined between the windings and the inner surfaces of the slots of the laminated stator core and of the housing, the heat-resistant resin is poured, in a molten state, onto the granular materials, and then the resin is set. Further, it is preferred that the granular materials mixed into the composite heat-conductive resinous material of the heat-transfer member comprise aluminum oxide granules. It is also preferred that the housing comprises a pair of housing members that support the laminated stator core axially therebetween, and that the cooling medium circuit is formed in the laminated stator core and the housing members, and continuously extends along the axial entire length of the laminated stator core and a projecting length of the coil-ends of the windings.

Heat generated, due to copper loss, by the windings arranged on the laminated stator core is transmitted to the heat-transfer member covering the windings. The heat-transfer member made of composite heat-conductive resinous material effectively transfers the heat to the laminated stator core and the housing. The heat transferred to the laminated stator core and the housing is absorbed by the cooling medium passing through the cooling medium circuit. At the same time, heat generated due to iron loss from the laminated stator core is also absorbed by the cooling medium passing through the cooling medium circuit. Therefore, heat generated by the windings and the laminated stator core is efficiently absorbed by the cooling medium, and thus the stator is effectively cooled.

### BRIEF DESCRIPTION OF THE DRAWINGS

The foregoing and the other objects, features, and advantages of the present invention will be described with relation to the embodiments shown in the accompanying drawings, in which;
Fig. 1 is a vertical sectional view of an electric motor having means for cooling a stator, according to an embodiment of the present invention, taken along line I-I of Fig. 2;
Fig. 2 is a plan view of a thin-plate core member which constructs a laminated stator core of the motor shown in Fig. 1; and
Figs. 3a and 3b illustrate a process for molding a heat-transfer member of the motor shown in Fig. 1, by sectional views of the laminated stator core of the motor of Fig. 1, taken along line II-II of Fig. 2.

### BEST MODE OF CARRYING OUT THE INVENTION

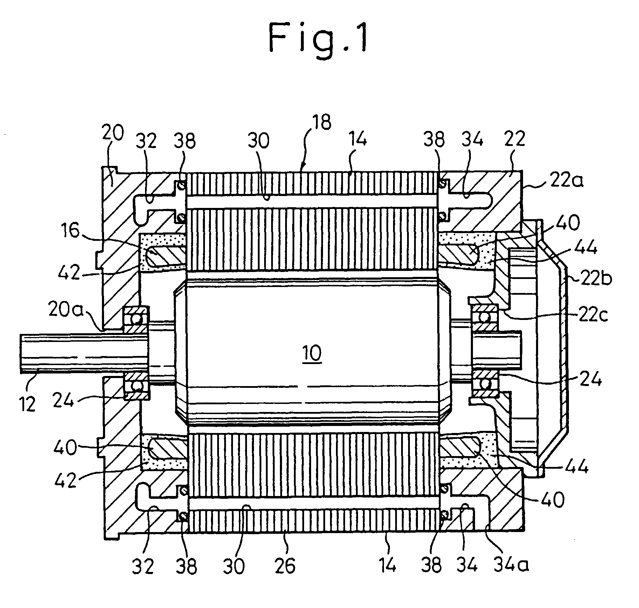

Referring to the drawings, Figure 1 shows a sectional view of an electric motor having means for cooling a stator, according to the embodiment of the present invention. The motor includes a rotor 10 arranged inside the motor and a stator 18 arranged at the outer periphery of the motor; the rotor 10 integrally having a rotating shaft 12; and the stator 18 having a laminated stator core 14 surrounding the rotor 10 with a predetermined space, and a plurality of windings 16 wound on the laminated stator core 14. A front housing 20 and a rear housing 22 are arranged at the axial front and rear ends of the motor, respectively, for carrying the rotating shaft 12 of the rotor 10, and for supporting the laminated stator core 14 between the front and rear housings. The front housing 20 is provided with a bearing 24 at a center opening 20a, for rotatably supporting the rotating shaft 12 integrated into the rotor 10. The rear housing 22 includes an annular member 22a and a cap member 22b closely fitted with the annular member 22a, and is also provided with a bearing 24 at a center opening 22c formed inside the cap member 22b, so as to rotatably support the rotating shaft 12 of the rotor 10.

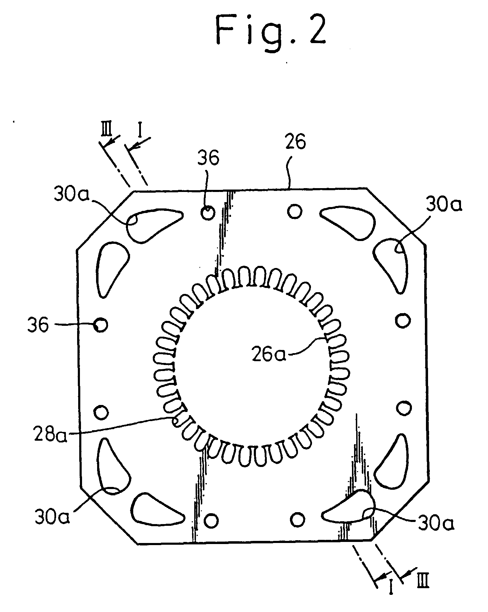

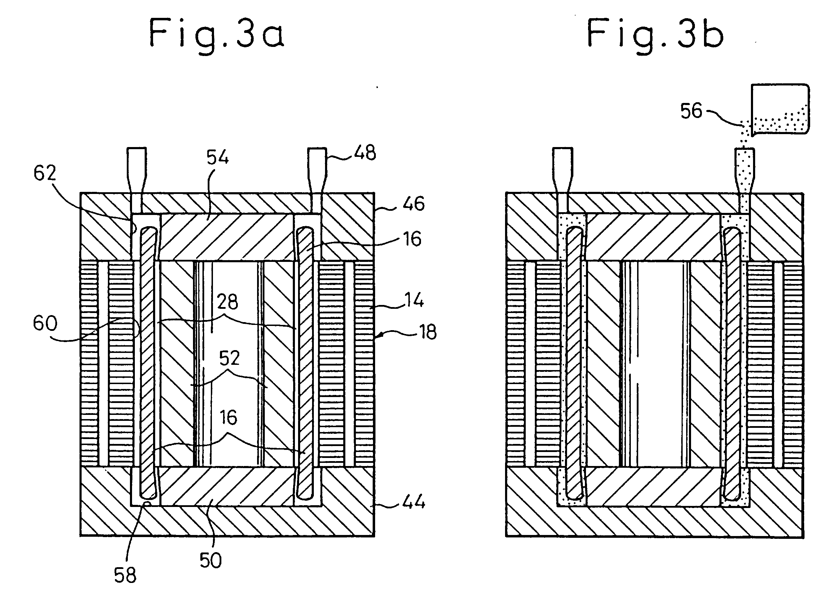

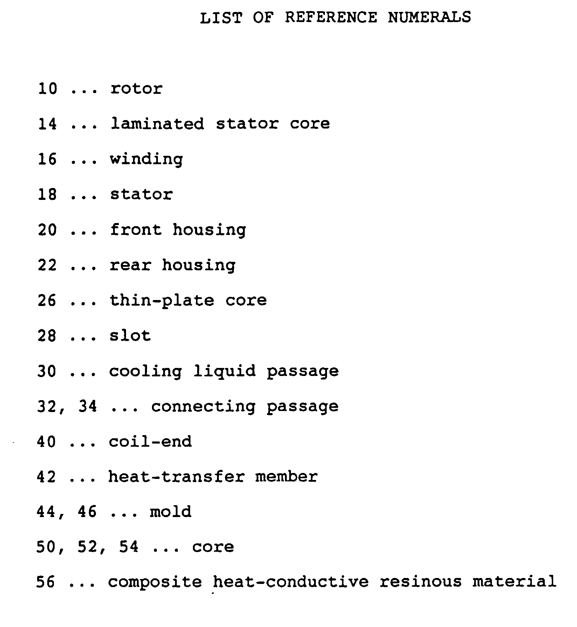

The laminated stator core 14 is formed by stacking a plurality of thin-plate cores 26 of a silicon steel plate, as shown in Fig. 2, in an axial direction of the motor. The thin-plate core 26 is provided with an opening 26a at a center thereof for surrounding the rotor 10, and a plurality of slot holes 28a at a periphery of the opening 26a. The laminated stator core 14 is constructed so as to seal small gaps between the adjacent thin-plate cores 26, by stacking thin-plate cores 26 that are previously applied with a thermosetting adhesive onto both sides thereof, or by vacuum-impregnating a thermosetting resin into stacked thin-plate cores 26 and suitably heating the resin and cores. A plurality of slots 28 (see Fig. 3a) are formed by stacking the thin-plate cores 26 so as to communicate the slot holes 28a, and the windings 16 are disposed within the respective slots 28.

As shown in Fig. 2, each of the thin-plate cores 26 forming the laminated stator core 14 is provided with a plurality of cooling liquid passage holes 30a at four corners thereof, so as to define a cooling liquid circuit for cooling the stator 18. The cooling liquid passage holes 30a are communicated by stacking the thin-plate cores 26, and define cooling liquid passages 30 (Fig. 1) extending axially in the laminated stator core 14. As shown in Fig. 1, the front housing 20 supporting the laminated stator core 14 is provided with connecting passages 32 for cooling liquid at positions corresponding to the cooling liquid passages 30, and the rear housing 22 is provided with connecting passages 34 for cooling liquid in the same manner. Further, the laminated stator core 14, the front housing 20, and the rear housing 22 are fixed together by a plurality of tie-bolts (not shown). Fig. 2 shows bolt holes 36 for tie-bolts.

The connecting passages 32, 34 of the front and rear housings 20, 22 connect the cooling liquid passages 30, being arranged at four corners of the laminated stator core 14, to one another in the respective housing 20, 22. Further, the rear housing 22 is provided with an inlet and an outlet of cooling liquid (one 34a of which is shown in Fig. 1) connected to an external cooling liquid feed source. The cooling liquid is introduced into the cooling liquid passages 30 of the laminated stator core 14 through the inlet, and is discharged from the cooling liquid passages 30 through the outlet. In this manner, a continuous cooling liquid circuit is defined from the cooling liquid inlet through the cooling liquid passages 30 and connecting passages 32, 34 to the cooling liquid outlet. Furthermore, as shown in Fig. 1, known O-rings 38 are disposed at junctions between the cooling liquid passages 30 of the laminated stator core 14 and the connecting passages 32, 34 of the front and rear housings 20, 22, so as to ensure sealing of the junctions.

The windings 16 wound on the laminated stator core 14 are covered over substantially the entire surfaces thereof, i.e., the surfaces of portions arranged in the slots 28 and of coil-ends 40 projecting from axial end faces of the laminated stator core 14, with heat-transfer members 42 that are made of the composite heat-conductive resinous material mentioned below. The composite heat-conductive resinous material is formed by mixing a highly heat-resistant, moldable resin, such as epoxy resin, with highly heat-conductive, electrically-insulative granular materials, such as aluminum oxide granules, as fillers. The composite heat-conductive resinous material is poured, in a molten state, into each space defined between the windings 16 and the inner surfaces of the slots 28 of the laminated stator core 14, and between the windings 16 and the inner surfaces of the front and rear housings 20, 22. Then, the composite heat-conductive resinous material is cold-set or thermoset, thereby the heat-transfer members 42 are formed so as to surround the windings 16 and to fill each space mentioned above. The heat-transfer members 42 thermally connect the windings 16 to the inner surfaces of the slots 28, and the windings 16 to the inner surfaces of the front and rear housings 20, 22. Consequently, heat generated by the windings 16 is effectively transferred, through the heat-transfer members 42 made of composite heat-conductive resinous material, to the laminated stator core 14, the front housing 20, and the rear housing 22. The laminated stator core 14, the front housing 20, and the rear housing 22 are provided with the cooling liquid passages 30, the connecting passages 32, and the connecting passages 34, respectively, over the axial entire length of the windings 16, therefore the heat transferred to the laminated stator core 14 and the front and rear housings 20, 22 is effectively absorbed by the cooling liquid that passes through the cooling liquid passages 30 and the connecting passages 32, 34.

The process for molding the heat-transfer members 42 from composite heat-conductive resinous material is described below, with reference to Figs. 3a and 3b. First, the laminated stator core 14 is formed by stacking a plurality of thin-plate cores 26, and the stator 18 is constructed by arranging the windings 16 in the slots 28 of the laminated stator core 14. The stator 18 constructed in this manner is mounted between a pair of molds 44, 46, as shown in Fig. 3a, and is arranged on a work table (not shown) while vertically orienting the axis of the stator 18. The upper mold 46 is provided with a plurality of gates 48. Cores 50, 52, 54 are disposed at position in the center bore of the stator 18 for arranging the rotor 10 and at axial front and rear positions of the center bore, the resinous material being not pored into these positions. In this state, the composite heat-conductive resinous material 56 containing the filler is poured, in a molten state, into the gate 48 of the upper mold 46, and flows downward, by gravity, through gaps between the slots 28 of the laminated stator core 14 and the windings 16 to the lower mold 44. During this process, the other gate 48 acts as air vent. In this manner, the composite heat-conductive resinous material 56 is poured successively into an annular cavity 56 defined between the lower mold 44 and the core 50, gaps 60 between the slots 28 as well as the core 52 and the windings 16, and an annular cavity 62 defined between the upper mold 46 and the core 54. Then, the composite heat-conductive resinous material 56 is suitably cold-set or thermo-set, and thus the heat-transfer member 42 is formed through the gaps 60 and the cavities 58, 62 (see Fig. 3b).

When the composite heat-conductive resinous material 56 cannot be sufficiently poured into the gaps and the cavities in the above method because of narrow spaces between the slots 28 of the laminated stator core 14 and the windings 16, e.g., particularly in the case of small sized motor, it is possible to separately pour the resin material and the filler of the composite heat-conductive resinous material 56. That is, only grained fillers of, e.g., aluminum oxide are put in each of the lower cavity 58, the gaps 60 between the slots 28 and the windings 16, and the upper cavity 62, and after that, an easily moldable resin such as epoxy resin is poured into each cavity or gap. According to this method, it becomes possible to pour the composite heat-conductive resinous material 56 into narrow spaces, and to improve the filler content.

The motor shown in Fig. 1 is constructed by inserting the rotor 10 into and fixing the front and rear housings 20, 22 to the stator 18, which is provided with the heat-transfer members 42 surrounding the windings 16 at the axial front and rear ends of the laminated stator core 14 and in the slots 28 thereof. In this respect, it is necessary to improve the molding accuracy of the heat-transfer member 42 so that the heat-transfer members 42 are brought into close contact with the inner surfaces of the front and rear housings 20, 22. To this end, it is also preferred that the above-mentioned second method is adopted.

Furthermore, because the windings 16 are covered with the heat-transfer members 42, the risk of substances entering the motor from the outside and adhering to the coil-ends 40, so as to cause a damage such as a short circuit, is eliminated.

In the above embodiment, a cooling medium for cooling the laminated stator core 14 and the windings 16 is described as a cooling liquid, but of course the present invention may be applied for a gas-cooled electric motor using a cooling gas. Also, the present invention may be applied for a cooling structure in which a cooling medium circuit is formed in an outer housing fixed in close contact with the outer periphery of a laminated stator core.

### Industrial Applicability

The present invention has a construction in which a cooling medium circuit is formed in the housing and/or the laminated stator core of an electric motor so as to extend over the entire length of the laminated stator core and the projecting length of the coil-ends of the windings arranged on the laminated stator core, and heat-transfer members, being molded from composite heat-conductive resinous material, are arranged in spaces between the windings and the inner surfaces of slots and the housing so as to cover the windings and to thermally connect the windings with the laminated stator core and the housing, thereby heat generated by the windings passes through the heat-transfer members, the laminated stator core, and the housing, and is absorbed by cooling medium passing through the circuit. Therefore, heat generated by the windings and the laminated stator core is efficiently absorbed by the cooling medium, and the stator is more effectively cooled, so that the heat loss of an electric motor is reduced and the performance thereof is improved.

## Claims

1. An electric motor having means for cooling a stator (18), comprising:
front and rear housing members (20,22)
a stator (18) fixed axially between said front and rear housing members, and including a generally cylindrical laminated stator core (14) having a plurality of slots (28) at inner periphery of said core (14), and a plurality of windings (16) arranged in each slot (28) of said laminated stator core (14);
a rotor (10) arranged inside said stator (18) in a rotatable manner;
a cooling medium circuit formed in said housing members (20, 22) and said laminated stator core (14), and continuously extending along at least an axial entire length of said laminated stator core (14) and a length of coil-ends (40) of said windings (16) projecting from axial both ends of said laminated stator core (14);
a heat-transfer member (42) formed from a composite heat-conductive resinous material (56) that is made by mixing a heat-resistant resin with a highly heat-conductive, electrically-insulative granular material, said heat-transfer member (42) covering said windings (16), and coming into contact with inner surfaces of said slots (28) of said laminated stator core (14) and said housing members (20, 22).

2. An electric motor as set forth in claim 1, wherein said granular materials mixed into said composite heat-conductive resinous material (56) of said heat-transfer member (42) comprise aluminum oxide granules.

## Patentansprüche

1. Elektromotor mit einem Mittel zum Kühlen eines Stators (18), umfassend:
vordere und hintere Gehäuseelemente (20, 22);
einen zwischen den vorderen und hinteren Gehäuseelementen axial befestigten Stator (18), der einen im wesentlichen zylindrisch laminierten Statorkern (14) mit einer Mehrzahl von Schlitzen (28) an seiner inneren Peripherie und einer Mehrzahl von Windungen (16), die in jedem Schlitz (28) des laminierten Statorkerns (14) angeordnet sind, aufweist;
einen Rotor (10), der innerhalb des Stators (18) drehbar angeordnet ist;
einen Kühlmediumkreislauf, der in den Gehäuseelementen (20, 22) und dem laminierten Statorkern (14) ausgebildet ist und sich durchgängig über wenigstens eine vollständige axiale Länge des Statorkerns (14) und über eine Länge der Spulenenden (40) der Windungen (16) erstreckt, die über die beiden Enden des laminierten Statorkerns (14) vorspringen;
ein Wärmeübertragungselement (42), das aus einem wärmeleitenden Verbund-Harzmaterial (56) gebildet ist, welches durch Mischen eines wärmeunempfindlichen Harzes mit einem hoch-wärmeleitenden, elektrisch nicht leitenden Granulatmaterial hergestellt ist, wobei das Wärmeübertragungselement (42) die Windungen (16) überdeckt und mit den inneren Oberflächen der Schlitze (28) des laminierten Statorkerns (14) und der Gehäuseelemente (20, 22) in Kontakt kommt.

2. Elektromotor nach Anspruch 1, wobei das Granulatmaterial, das in das wärmeleitende Verbund-Harzmaterial (46) des Wärmeübertragungselements (42) hineingemischt ist, Aluminiumoxidkörner umfaßt.

## Revendications

1. Moteur électrique muni d'un moyen de refroidissement du stator (18),
comprenant :
des éléments de carter avant et arrière (20, 22) ;
un stator (18) fixé axialement entre les éléments de carter avant et arrière, ce stator comprenant un noyau de stator feuilleté généralement cylindrique (14) muni d'un certain nombre de fentes (28) à la périphérie intérieure de ce noyau (14), ainsi qu'un certain nombre d'enroulements (16) disposés dans chaque fente (28) du noyau de stator feuilleté (14) ;
un rotor (10) disposé à l'intérieur du stator (18) de manière à pouvoir tourner ;
un circuit d'agent de refroidissement formé dans les éléments de carter (20, 22) et le noyau de stator feuilleté (14), ce circuit s'étendant de façon continue le long d'au moins toute la longueur axiale du noyau de stator feuilleté (14), et une certaine longueur des extrémités de bobine (40) des enroulements (16) faisant saillie aux deux extrémités axiales du noyau de stator feuilleté (14) ; et
un élément de transfert de chaleur (42) réalisé dans un matériau résineux (56) composite conducteur de la chaleur qu'on obtient en mélangeant une résine résistante à la chaleur avec un matériau granulaire extrêmement conducteur de la chaleur et électriquement isolant, cet élément de transfert de chaleur (42) recouvrant les enroulements (16) et venant en contact avec les surfaces intérieures des fentes (28) du noyau de stator feuilleté (14) et des éléments de carter (20, 22).

2. Moteur électrique selon la revendication 1,
dans lequel
le matériau granulaire mélangé dans le matériau résineux (56) composite conducteur de la chaleur de l'élément de transfert de chaleur (42), consiste en des granules d'oxyde d'aluminium.
